# EUROPÄISCHE PATENTSCHRIFT

(11) **EP 0 856 431 B1**
(45) Veröffentlichungstag und Bekanntmachung des Hinweises auf die Patenterteilung: **10.05.2000**
(21) Anmeldenummer: 97101514.4
(22) Anmeldetag: 31.01.1997
(51) Int. Cl.: B60Q 1/50, B60Q 1/52

(54) **Auffahrwarnsystem für Fahrzeuge**
Collision warning system
Système avertisseur de collision

(43) Veröffentlichungstag der Anmeldung: 05.08.1998
(73) Patentinhaber: Hartl, Lorenz, 83071 Stephanskirchen (DE)
(72) Erfinder: Hartl, Lorenz, 83071 Stephanskirchen (DE)
(74) Vertreter: Bauer, Friedrich, Dipl.-Ing.

(56) Entgegenhaltungen:
- EP-A- 0 214 594
- DE-A- 4 231 137
- DE-U- 8 812 241
- FR-A- 2 737 332
- US-A- 5 091 726
- US-A- 5 426 414

## Beschreibung

Die Erfindung betrifft ein Auffahrwarnsystem für Fahrzeuge gemäß dem Oberbegriff des Anspruches 1.

Das Dokument US-A-5 091 726 beschreibt den gattungsbildenden Stand der Technik gemäß dem Oberbegriff des Anspruchs 1.

Im Straßenverkehr besteht häufig das Problem, daß Fahrzeuge den für eine bestimmte Geschwindigkeit erforderlichen Abstand zum vorausfahrenden Fahrzeug nicht einhalten und zu nahe auffahren. Dies kann insbesondere bei höheren Geschwindigkeiten den Fahrer des vorausfahrenden Fahrzeuges verunsichern und zu unüberlegten, überhasteten Reaktionen verleiten. Beispielsweise kann sich ein vorausfahrender Fahrer genötigt sehen, ebenfalls wesentlich schneller zu fahren, als er eigentlich möchte und es seinem Fahrkönnen und den Umgebungsbedingungen angemessen wäre. Ein weiteres Beispiel ist die Situation auf Autobahnen, wo sich ein auf der Überholspur befindender Fahrer aufgrund eines dicht auffahrenden Folgefahrzeugs genötigt sieht, möglichst schnell wieder von der Überholspur auf die Normalspur zu wechseln, wobei dann leicht andere nebenherfahrende Fahrzeuge auf der Normalspur übersehen werden. Hierdurch können insbesondere bei hohen Geschwindigkeiten schwere Unfälle provoziert werden. Darüber hinaus besteht selbstverständlich die Gefahr, daß bei zu geringem Abstand der Bremsweg für das Folgefahrzeug nicht ausreicht, um bei einem starken Abbremsen des vorausfahrenden Fahrzeugs einen Auffahrunfall zu vermeiden.

Der Erfindung liegt die Aufgabe zugrunde, ein Auffahrwarnsystem für Fahrzeuge zu schaffen, mit dem auf wirksame Weise die Häufigkeit eines zu nahen Auffahrens eines Folgefahrzeuges verringert werden kann.

Diese Aufgabe wird erfindungsgemäß durch die Merkmale des Anspruches 1 gelöst. Vorteilhafte Ausführungsformen sind in den weiteren Ansprüchen beschrieben.

Das erfindungsgemäße Auffahrwarnsystem weist eine im Heckbereich des Fahrzeuges angeordnete, nach hinten gerichtete Entfernungsmeßeinrichtung zur Messung des Abstandes zwischen dem Fahrzeug und einem Folgefahrzeug auf. Weiterhin sind eine optische Warneinrichtung, die an einer von hinten sichtbaren Stelle des Fahrzeuges angeordnet ist, und ein elektronischer Rechner vorgesehen, um die Warneinrichtung in einer vorbestimmten Weise zu aktivieren, wenn der von der Entfernungsmeßrichtung gemessene Abstand zum Folgefahrzeug einen bestimmten Sollwert unterschreitet.

Mit Hilfe des erfindungsgemäßen Auffahrwarnsystems kann der gemessene Abstand zum Folgefahrzeug mit einem im Rechner gespeicherten Abstandsollwert, der von der aktuellen Geschwindigkeit und gegebenenfalls auch von den Witterungsbedingungen (trocken-naß-schneeig/eisig) abhängig sein kann, verglichen werden. Wird dieser Sollwert unterschritten, reagiert die optische Warneinrichtung beispielsweise derart, daß mit zunehmender Unterschreitung des Sollwerts eine zunehmende Anzahl von Warnlichtern am vorausfahrenden Fahrzeug aufleuchtet, so daß der Warneffekt für den Fahrer des Folgefahrzeugs umso stärker ist, je näher er auffährt.

Die optische Warneinrichtung kann zusätzlich zu dieser Mehrzahl von Warnlichtern auch eine alphanumerische Anzeigeeinrichtung zum Anzeigen eines Textes enthalten. Auf dieser Anzeigeeinrichtung könnte bei Unterschreiten eines bestimmten Sollabstandes, ein für den nachfolgenden Fahrer sichtbarer Text, beispielsweise "Bitte Abstand halten!", angezeigt werden.

Gemäß einer vorteilhaften Ausführungsform ist die Anzeige der alphanumerischen Anzeigeeinrichtung mittels einer mit dem Rechner verbundenen Eingabeeinrichtung variierbar, die vom Fahrzeuginneren aus bedienbar ist. Bei einer derartigen Eingabeeinrichtung kann es sich um eine tastaturähnliche Einrichtung handeln, mit der vorprogrammierte oder individuell erstellbare Anzeigetexte in den Rechner eingegeben und damit auf der alphanumerischen Anzeigeeinrichtung angezeigt werden können.

Die Anordnung der optischen Warneinrichtung erfolgt an einer von hinten, d.h. vom Folgefahrzeug aus, sichtbaren Stelle des Fahrzeugs. Vorzugsweise ist die optische Warneinrichtung im Bereich der Heckscheibe unterhalb des Fahrzeugdaches, auf der Hutablage, am Kofferraumdeckel oder im rückwärtigen Karosseriebereich angeordnet.

Gemäß einer vorteilhaften Ausführungsform ist zusätzlich zur optischen Warneinrichtung im Heckbereich des Fahrzeugs eine nach hinten zielende, mit dem Rechner verbundene Fotografiereinrichtung angeordnet, die automatisch und/oder manuell in Abhängigkeit des gemessenen Abstandes zum Folgefahrzeug ausgelöst wird, um ein Folgefahrzeug und insbesondere dessen Fahrzeugkennzeichen zu fotografieren. Auf dem Foto kann auch automatisch Datum, Abstand und die gefahrene Geschwindigkeit dokumentiert werden.

Die Erfindung wird nachfolgend anhand der Zeichnungen beispielshaft näher erläutert. In diesen zeigen:
- Figur 1 :: eine Rückansicht eines Fahrzeugs mit einem erfindungsgemäßen Auffahrwarnsystem,
- Figur 2 :: eine Seitenansicht des in Figur 1 gezeigten Fahrzeugs und eines Folgefahrzeugs,
- Figuren 3A rund 3B :: eine Rück- bzw. Seitenansicht eines Fahzeugs, das mit einem Auffahrwarnsystem gemäß einer zweiten Ausführungsform der Erfindung ausgestattet ist,
- Figuren 4A und 4B :: eine Rück- bzw. Seitenansicht eines Fahrzeugs, das mit einem Auffahrwarnsystem gemäß einer dritten Ausführungsform der Erfindung ausgestattet ist,
- Figur 5 :: eine Rückansicht eines Fahrzeugs, das mit einem Auffahrwarnsystem gemäß einer vierten Ausführungsform der Erfindung ausgestattet ist, und
- Figur 6: eine Rückansicht eines Fahrzeugs, das mit einem Auffahrwarnsystem gemäß einer fünften Ausführungsform der Erfindung ausgestattet ist.

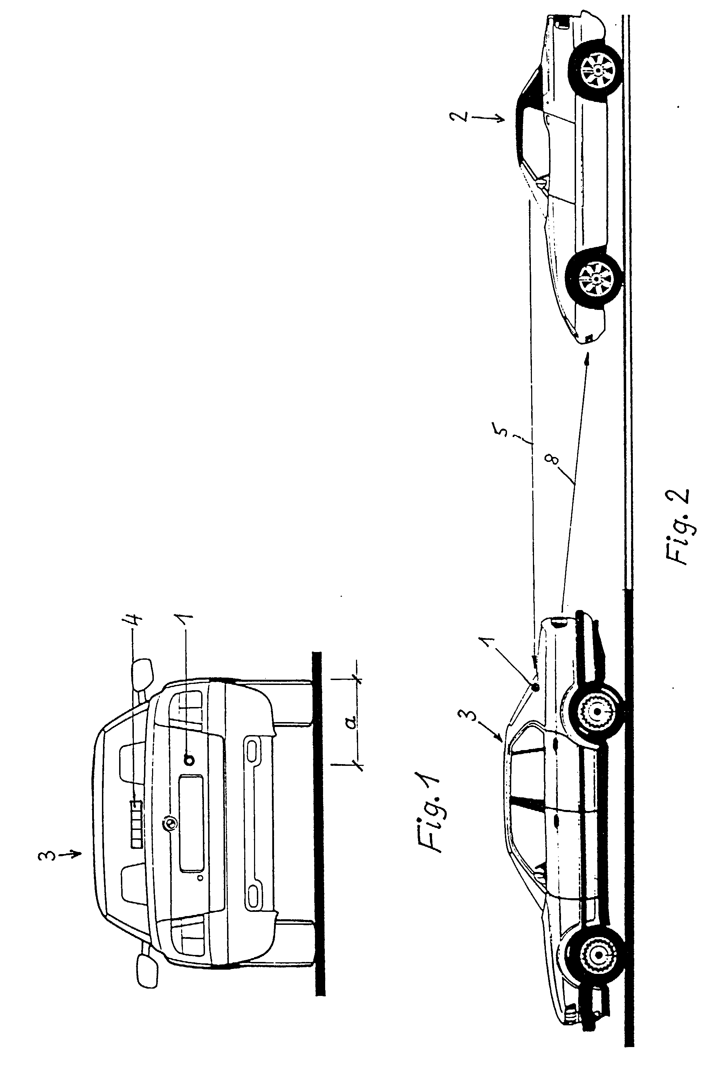

Das in den Figuren 1 und 2 gezeigte Auffahrwarnsystem weist eine Entfernungsmeßeinrichtung 1 auf, die aus einem nach hinten abstrahlenden Ultraschall-, Laser- oder Infrarotmeßgerät bestehen kann. Die Entfernungsmeßeinrichtung 1 ist im dargestellten Ausführungsbeispiel an der rückwärtigen Seite des Kofferraumdeckels zwischen dem sich auf der Beifahrerseite befindenden Rücklicht und dem Nummernschild derart angeordnet, daß die Entfernung a zwischen der auf der Beifahrerseite liegenden Außenseite des Fahrzeugs und der Entfernungsmeßeinrichtung 1 etwa ein Viertel der gesamten Fahrzeugbreite beträgt. Diese außermittige Anordnung stellt sicher, daß die Meßergebnisse durch die gerade nach hinten abstrahlende Entfernungsmeßeinrichtung nicht durch überholende Fahrzeuge beeinflußt werden, sondern daß nur Folgefahrzeuge 2, die in derselben Spur hinter dem vorausfahrenden Fahrzeug 3 fahren, von der Entfernungsmeßeinrichtung 1 erfaßt werden.

In Figur 2 sind die von der Entfernungsmeßeinrichtung 1 abgestrahlten Ultraschallwellen, Infrarotwellen bzw. Laserstrahlen mit dem Pfeil 8 schematisch dargestellt.

Um einerseits die Entfernungsmeßeinrichtung 1 zu schützen und andererseits eine möglichst gefällige und unauffällige Integration im Fahrzeug 3 zu ermöglichen, wird die Entfernungsmeßeinrichtung 1 zweckmäßigerweise an der Innenseite des Kofferraumdeckels befestigt, wobei im wesentlichen nur die hintere Stirnseite mit der Austrittsöffnung für die Ultraschall-/Infrarotwellen oder Laserstrahlen von außen sichtbar ist. In diesem Fall ist es lediglich erforderlich, eine relativ kleine Öffnung auf der Rückseite des Kofferraumdeckels vorzusehen.

Die Entfernungsmeßeinrichtung 1 ist mit einem nicht dargestellten elektronischen Rechner elektrisch verbunden, der an einer beliebigen passenden Stelle innerhalb des Fahrzeuges 3 angeordnet sein kann. Die von der Entfernungsmeßeinrichtung 1 gemessenen Abstandswerte zum Folgefahrzeug 2 werden laufend dem Rechner zugeführt und mit vorher einprogrammierten Abstands-Sollwerten verglichen.

Auf der Hutablage des Fahrzeugs 3 befindet sich weiterhin eine optische Warneinrichtung 4, die im vorliegenden Fall aus fünf einzelnen, nebeneinander angeordneten und getrennt ansteuerbaren Warnlichtern besteht. Diese optische Warneinrichtung 4 ist ebenfalls mit dem Rechner verbunden. Der Rechner kann beispielsweise so programmiert sein, daß er bei Unterschreiten eines bestimmten Abstandes zum Folgefahrzeug 2 zunächst ein Warnlicht der optischen Warneinrichtung 4 aufleuchten läßt und bei einer weiteren Verringerung des Abstandes die Anzahl der aufleuchtenden Warnlichter zunimmt.

Die optische Warneinrichtung 4 ist derart auf der Hutablage angeordnet, daß sie vom Fahrer des Folgefahrzeugs 2 aus gut gesehen werden kann, wie durch den Sehstrahl 5 in Figur 2 schematisch dargestellt ist.

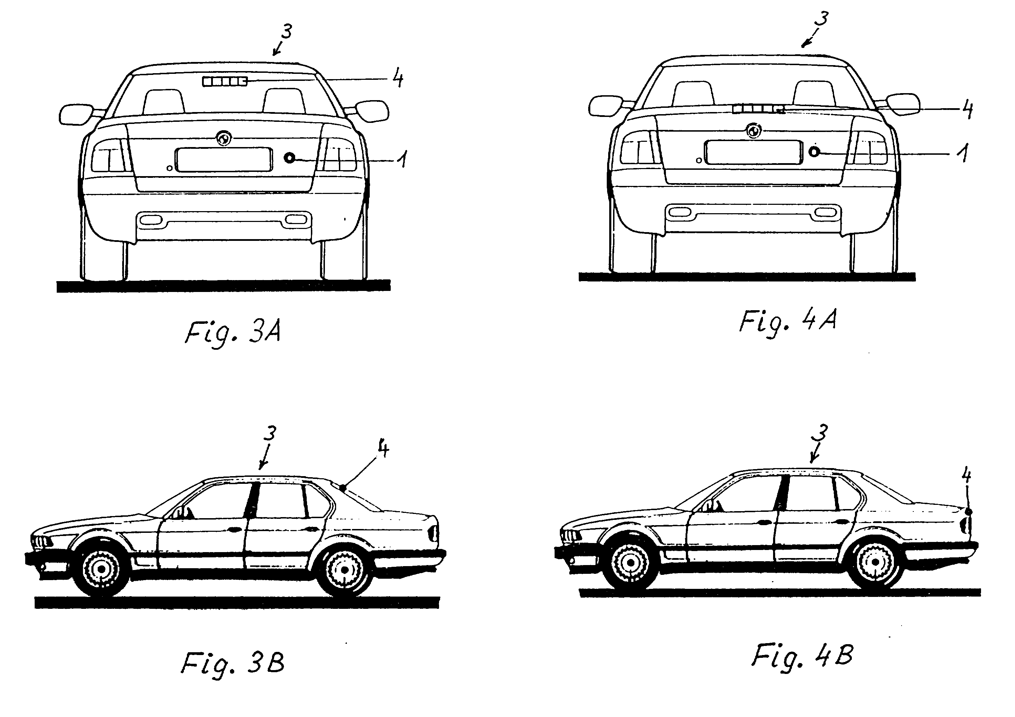

Die in den Figuren 3A und 3B dargestellte zweite Ausführungsform unterscheidet sich von derjenigen der Figuren 1 und 2 dadurch, daß die optische Warneinrichtung 4 in erhöhter Position, d.h. in einem dachnahen Bereich des Fahrzeugs 3 unmittelbar vor der Heckscheibe angeordnet ist.

Wie die Figuren 4A und 4B zeigen, kann die optische Warneinrichtung 4 alternativ hierzu auch im hinteren Bereich des Kofferraumdeckels vorgesehen sein. Eine besonders formschöne Gestaltung läßt sich hierbei erreichen, wenn die optische Warneinrichtung 4 in den Kofferraumdeckel integriert ist.

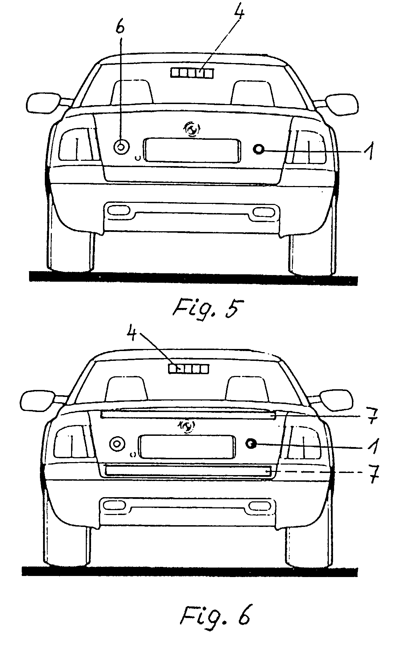

Die in Figur 5 gezeigte Ausführungsform unterscheidet sich von den vorhergehenden Ausführungsformen dadurch, daß zusätzlich zur optischen Warneinrichtung 4 eine Fotografiereinrichtung 6 im Heckbereich des Fahrzeugs 3 vorgesehen ist. Von dieser Fotografiereinrichtung 6 ist vorzugsweise nur die Linse von außen erkennbar, während der übrige Teil innerhalb des Kofferraumdeckels angeordnet ist. Im gezeigten Ausführungsbeispiel befindet sich die Fotografiereinrichtung 6 etwa in gleicher Höhe wie die Entfernungsmeßeinrichtung 1, jedoch auf der gegenüberliegenden Seite des Nummernschildes. Die Fotografiereinrichtung 6 und Entfernungsmeßeinrichtung 1 können jedoch an beliebigen anderen Stellen im Heckbereich des Fahrzeuges 3 angeordnet werden, die eine direkte "Sicht" auf das Folgefahrzeug 2 ermöglichen. Die Fotografiereinrichtung 6 ist wiederum mit dem nicht dargestellten Rechner verbunden, der derart programmiert sein kann, daß bei Unterschreiten eines Sollabstandes das Folgefahrzeug 2 und insbesondere dessen Kennzeichen automatisch fotografiert wird.

Bei dem aus Figur 6 ersichtlichen Ausführungsbeispiel ist zusätzlich zur Fotografiereinrichtung 6 eine alphanumerische Anzeigeeinrichtung 4' an der Rückseite des Kofferraumdeckels vorgesehen. Es handelt sich hierbei um horizontal angeordnete, streifenförmige Displays, die in der Lage sind, Texte darzustellen. Die Größe der einzelnen Schriftzeichen auf der Anzeigeeinrichtung 7 wird derart gewählt, daß sie vom Fahrer des Folgefahrzeugs 2, der einen bestimmten Sicherheitsabstand nicht einhält, ohne weiteres gelesen werden können. Die Anzeigeeinrichtung 7 wird vom Rechner derart angesteuert, daß in Abhängigkeit des vom Folgefahrzeug 2 eingehaltenen Abstandes eine bestimmte Leuchtschrift aufleuchtet, beispielsweise
- Bitte Abstand halten!
- Sie werden fotographiert!
- Sie werden angezeigt!

Die in Abhängigkeit des vom Folgefahrzeug 2 eingehaltenen Abstandes anzuzeigenden Texte können fest im Rechner einprogrammiert sein. Alternativ ist es möglich, mittels eines nicht dargestellten Eingabegeräts, das beispielsweise vom Beifahrer bedient wird, einen individuellen Text einzugeben. Die individuelle Eingabe mittels eines Eingabegeräts bietet den Vorteil, daß unabhängig vom Problem der Abstandseinhaltung eine Nachrichtenübermittlung zum Folgefahrzeug während der Fahrt möglich ist.

Zweckmäßigerweise ist das erfindungsgemäße Auffahrwarnsystem mit einer Umschalteinrichtung verbunden, so daß die Aktivierung der optischen Warneinrichtung 4, der Fotografiereinrichtung 6 oder Anzeigeeinrichtung 7 nicht nur automatisch vom Rechner, sondern auch alternativ hierzu manuell ausgelöst werden kann.

Zweckmäßigerweise wird der die optische Warneinrichtung 4, die Fotografiereinrichtung 6 oder Anzeigeeinrichtung 7 aktivierende Abstand vom Rechner in Abhängigkeit der gefahrenen Geschwindigkeit und/oder den Witterungsbedingungen (trocken-naß-schneeig/eisig) berechnet.

Die Anzeige der alphanumerischen Anzeigeeinrichtung 7 kann aus einem durchlaufenden Text bestehen.

Zweckmäßigerweise ist das erfindungsgemäße Auffahrwarnsystem mit einer Abschalteinrichtung versehen, mit welcher automatisch oder manuell durch den Fahrer das Auffahrwarnsystem ausgeschaltet werden kann, wenn das Folgefahrzeug 2 zu einem Überholvorgang ansetzt und dies durch ein Blinksignal ankündigt.

Das Auffahrwarnsystem ist hauptsächlich für die Benutzung von Autobahnen und Schnellstraßen vorgesehen und schaltet sich vorteilhafterweise erst ab einer Geschwindigkeit von 30 oder 40 km/h automatisch oder durch Knopfdurch ein.

Dem Fahrer des Fahrzeugs 3 wird vorzugsweise die Wirksamkeit der optischen Warneinrichtung 4, der Fortografiereinrichtung 6 und/oder Anzeigeeinrichtung 7 über Signalanzeigemittel, beispielsweise in der Form von im Armaturenbrett eingebauten Lämpchen, angezeigt. Eine derartige Anzeige wird zweckmäßigerweise auch dann aktiviert, wenn der Fahrer den Knopf für das Sichtbarmachen eines Schriftzuges auf der Anzeigeeinrichtung 7 betätigt, wobei das entsprechende Lämpchen im Betätigungsknopf integriert sein kann.

## Patentansprüche

1. Auffahrwarnsystem für Fahrzeuge, mit einer im Heckbereich des Fahrzeuges (3) angeordneten, nach hinten gerichteten Entfernungsmeßeinrichtung (1) zur Messung des Abstandes zwischen dem Fahrzeug (3) und einem Folgefahrzeug (2), einer optischen Warneinrichtung (4), die an einer von hinten sichtbaren Stelle des Fahrzeugs (3) angeordnet ist, und einem elektronischen Rechner zum Aktivieren der Warneinrichtung (4), wenn der von der Entfernungsmeßeinrichtung (1) gemessene Abstand zum Folgefahrzeug (2) einen bestimmten Sollwert unterschreitet, **dadurch gekennzeichnet,** daß die optische Warneinrichtung (4) eine Mehrzahl von Warnlichtern enthält, die derart gesteuert sind, daß bei geringerem Abstand des Folgefahrzeugs (2) eine größere Anzahl von Warnlichtern bei einer bestimmten Geschwindigkeit aufleuchtet als bei größerem Abstand.

2. Auffahrwarnsystem nach Anspruch 1, **dadurch gekennzeichnet,** daß die optische Warneinrichtung (4) im Bereich der Heckscheibe unterhalb des Fahrzeugdaches, auf der Hutablage, am Kofferraumdeckel oder im rückwärtigen Karosseriebereich angeordnet ist.

3. Auffahrwarnsystem nach Anspruch 1 oder 2, **dadurch gekennzeichnet,** daß im Heckbereich des Fahrzeuges (3) eine nach hinten zielende, mit dem Rechner verbundene Fotografiereinrichtung (6) angeordnet ist, die vom Rechner automatisch oder manuell in Abhängigkeit des gemessenen Abstandes des Folgefahrzeugs (2) ausgelöst wird, um ein Folgefahrzeug (2) zu fotografieren.

4. Auffahrwarnsystem nach Anspruch 3, **dadurch gekennzeichnet,** daß die Entfernungsmeßeinrichtung (1) und/oder Fotografiereinrichtung (6) zumindest überwiegend innerhalb der Außenkontur des Fahrzeugs (3) angeordnet und durch entsprechende Öffnungen im Heckbereich des Fahrzeugs (3) hindurch wirksam sind.

5. Auffahrwarnsystem nach einem der vorhergehenden Ansprüche, **dadurch gekennzeichnet,** daß die Entfernungsmeßeinrichtung aus einem Ultraschall-, Laser- oder Infrarotmeßgerät besteht, das am Heck im Bereich zwischen Fahrzeugmitte und der Beifahrer-Außenseite des Fahrzeugs (3) angeordnet ist, wobei die Entfernung (a) zwischen der Außenseite des Fahrzeugs (3) und der Entfernungsmeßeinrichtung (1) 20 - 40 % der Gesamtbreite des Fahrzeugs (3) beträgt.

6. Auffahrwarnsystem nach einem der Ansprüche 3 bis 5, **dadurch gekennzeichnet,** daß der die optische Warneinrichtung (4) und/oder die Fotografiereinrichtung (6) aktivierende Abstand vom Rechner laufend in Abhängigkeit der gefahrenen Geschwindigkeit und/oder den Witterungsbedingungen berechnet wird.

## Claims

1. Collision warning system for vehicles, having a range measuring device (1), which is arranged in the back region of the vehicle (3) and points towards the back, for measuring the distance between the vehicle (3) and a vehicle (2) behind, having an optical warning device (4) arranged at a point on the vehicle (3) which is visible from the back, and having an electronic computer for activating the warning device (4) if the distance which the range measuring device (1) measures from the vehicle (2) behind falls below a particular nominal value, characterized in that the optical warning device (4) contains a plurality of warning lights which are controlled such that, when the vehicle (2) behind is relatively close, a larger number of warning lights are lit up at a particular speed than when it is relatively distant.

2. Collision warning system according to Claim 1, characterized in that the optical warning device (4) is arranged in the region of the back window below the vehicle roof, on the parcel shelf, on the boot lid or in the rear body region.

3. Collision warning system according to Claim 1 or 2, characterized in that arranged in the back region of the vehicle (3) is a photographic device (6) which is aimed towards the back, is connected to the computer and is automatically or manually triggered by the computer on the basis of the measured distance of the vehicle (2) behind in order to photograph a vehicle (2) behind.

4. Collision warning system according to Claim 3, characterized in that the range measuring device (1) and/or the photographic device (6) are at least predominantly arranged inside the outer contour of the vehicle (3) and are effective through appropriate openings in the back region of the vehicle (3).

5. Collision warning system according to one of the preceding claims, characterized in that the range measuring device comprises an ultrasound, laser or infrared measuring device arranged at the back in the region between the centre of the vehicle and the passenger-side exterior of the vehicle (3), the distance (a) between the exterior of the vehicle (3) and the range measuring device (1) being 20 - 40% of the overall width of the vehicle (3).

6. Collision warning system according to one of Claims 3 to 5, characterized in that the distance which activates the optical warning device (4) and/or the photographic device (6) is continuously calculated by the computer on the basis of the speed of travel and/or the weather conditions.

## Revendications

1. Système avertisseur de collision pour véhicules, comportant un dispositif de mesure de distance (1) agencé dans la région arrière du véhicule (3) et orienté vers l'arrière, pour mesurer la distance entre le véhicule (3) et un véhicule suivant (2), un dispositif avertisseur optique (4) qui est agencé à un emplacement du véhicule (3) visible depuis l'arrière, et un calculateur électronique pour activer le dispositif avertisseur (4) lorsque la distance mesurée par le dispositif de mesure de distance (1) par rapport au véhicule suivant (2) est inférieure à une valeur de consigne déterminée, caractérisé en ce que le dispositif avertisseur optique (4) comprend une multitude de feux avertisseurs qui sont commandés de telle manière que, pour une vitesse déterminée, dans le cas où la distance par rapport au véhicule suivant (2) est faible, un plus grand nombre de feux avertisseurs s'allume que dans le cas où cette distance est plus grande.

2. Système avertisseur de collision selon la revendication 1, caractérisé en ce que le système avertisseur optique (4) est agencé dans la zone de la fenêtre arrière au-dessous du toit du véhicule, sur la plage arrière, sur le capot du coffre ou dans la région de carrosserie arrière.

3. Système avertisseur de collision selon l'une ou l'autre des revendications 1 et 2, caractérisé en ce que dans la zone arrière du véhicule (3) est agencé un dispositif photographique (6) relié au calculateur et visant vers l'arrière, lequel est déclenché de manière automatique par le calculateur ou manuelle en fonction de la distance mesurée par rapport au véhicule suivant (2) pour photographier le véhicule suivant (2).

4. Système avertisseur de collision selon la revendication 3, caractérisé en ce que le dispositif de mesure de distance (1) et/ou le dispositif photographique (6) sont agencés au moins en grande partie à l'intérieur du contour extérieur du véhicule (3) et sont actifs à travers des ouvertures correspondantes ménagées dans la zone arrière du véhicule (3).

5. Système avertisseur de collision selon l'une quelconque des revendications précédentes, caractérisé en ce que le dispositif de mesure de distance est constitué par un appareil de mesure à ultrasons, à laser, ou à infrarouges qui est agencé sur l'arrière dans la région entre le milieu du véhicule et l'extérieur du côté passager du véhicule (3), la distance (a) entre le côté extérieur (3) et le dispositif de mesure de distance (1) s'élevant de 20 à 40 % de la largeur totale du véhicule (3).

6. Système avertisseur de collision selon l'une quelconque des revendications 3 à 5, caractérisé en ce que la distance activant le dispositif avertisseur (4) et/ou le dispositif photographique (6) est calculée par le calculateur de manière continue en fonction de la vitesse de roulement et/ou des conditions atmosphériques.
